# EUROPEAN PATENT SPECIFICATION

(11) **EP 2 244 974 B1**
(45) Date of publication and mention of the grant of the patent: **31.10.2012**
(21) Application number: 08859885.9
(22) Date of filing: 18.11.2008
(51) Int. Cl.: C01B 33/18, C09C 1/30

(54) **FLAKES COMPRISING PYROGENICALLY PREPARED SILICON DIOXIDE**
FLOCKEN MIT PYROGEN HERGESTELLTEN SILIZIUMDIOXID
PAILLETTES COMPRENANT DU DIOXYDE DE SILICIUM PRÉPARÉ PAR VOIE PYROGÉNIQUE

(30) Priority: 12.12.2007 DE 102007059860
(43) Date of publication of application: 03.11.2010
(73) Proprietor: Evonik Degussa GmbH, 45128 Essen (DE)
(72) Inventor: KNEISEL, Florian Felix, 45147 Essen (DE); HOFMANN, Ralph, 74722 Buchen (DE)
(86) International application number: PCT/EP2008/065775
(87) International publication number: WO 2009/074432

(56) References cited:
- EP-A- 1 813 574
- WO-A-03/068868

## Description

The invention relates to flakes comprising pyrogenically prepared silicon dioxide, a process for their production and use thereof.

It is known that flakes can be produced from pyrogenically prepared silicon dioxide by partly dearating pyrogenically prepared silicon dioxide, which is present as a loose heap of nanoscale, highly agglomerated particles, by reduced atmospheric pressure, mechanically precompacting said silicon dioxide and finally compacting it by pressing to give flakes. These flakes can then be crushed and the fragments optionally classified (EP 1 813 574 A1).

Hydrophilic and also hydrophobic, pyrogenically prepared silicon dioxide particles can be used as starting materials. The silicon dioxide may have been rendered hydrophobic inter alia with silazanes of the type

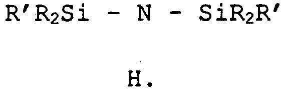

A disadvantage of the known process is found in the case of particles which have a high specific surface area, measured by nitrogen adsorption (BET), and simultaneously a high hydrophobicity, measured by wetting with methanol-water mixtures of graded methanol content (Corning Glass), in that these particles have a very high fluidity, so that the process according to EP 1 813 574 A1 is truly uneconomical for compacting such particles.

Fluidity is to be understood as meaning that the loose heap which is formed by agglomeration of highly aggregated particles and consists of more than 95 per cent of its volume of air and only of less than 5 per cent of its volume of solid is orthogonally deflected under the action of a compressive force applied from outside, it being possible for said heap also to escape through very small gaps in the same manner as a low-viscosity liquid. The flakes of hydrophobic silicon dioxides can therefore be produced only with difficulty by the process described in EP 1 813 574 A1.

In many cases, very high pressures, very long pressure dwell times and often numerous compacting cycles have to be implemented in the compacting of hydrophobic silicon dioxides. Silicon dioxides which both consist of very fine particles and are additionally strongly hydrophobic therefore cannot be compressed economically by the known process to give compact materials.

It was therefore the object to prepare hydrophobic flakes comprising pyrogenically prepared silicon dioxide by a process which does not have these disadvantages.

The invention relates to flakes comprising pyrogenically prepared silicon dioxide which are characterized in that the flakes are rendered water repellent after compacting.

The imparting of water repellency can be carried out using one or more compounds from the following group:
a) Organosilanes of the type (RO)₃Si(CₙH₂ₙ₊₁) and (RO)₃Si(CₙH₂ₙ₋₁)
   R = alkyl, such as, for example, methyl-, ethyl-, n-propyl-, isopropyl-, butyl-
   n = 1-20
b) Organosilanes of the type R'ₓ(RO)_{y}Si(CₙH₂ₙ₊₁) and R'ₓ(RO)_{y}Si(CₙH₂ₙ₋₁)
   R = alkyl, such as, for example, methyl-, ethyl-, n-propyl-, isopropyl-, butyl-
   R' = alkyl, such as, for example, methyl-, ethyl-, n-propyl-, isopropyl-, butyl-
   R'= cycloalkyl
   n = 1-20
   x+y = 3
   x = 1.2
   y = 1.2
c) Haloorganosilanes of the type X₃Si(CₙH₂ₙ₊₁) and X₃Si (CₙH₂ₙ₋₁)
   X = Cl, Br
   n = 1-20
d) Haloorganosilanes of the type X₂(R')Si(CₙH₂ₙ₊₁) and X₂(R')Si(CₙH₂ₙ₋₁)
   X = Cl, Br
   R' = alkyl, such as, for example, methyl-, ethyl-, n-propyl-, isopropyl-, butyl-
   R'= cycloalkyl
   n = 1-20
e) Haloorganosilanes of the type X(R')₂Si(CₙH₂ₙ₊₁) and X(R')₂Si(CₙH₂ₙ₋₁)
   X = Cl, Br
   R' = alkyl, such as, for example, methyl-, ethyl-, n-propyl-, isopropyl-, butyl-
   R'= cycloalkyl
   n = 1-20
f) Organosilanes of the type (RO)₃Si(CH₂)ₘ-R'
   - R =: alkyl, such as methyl-, ethyl-, propyl-
   - m =: 0.1-20
   - R' =: methyl-, aryl (for example -C₆H₅, substituted phenyl radicals) -C₄F₉, OCF₂-CHF-CF₃, -C₆F₁₃, -O-CF₂-CHF₂ -NH₂, -N₃, -SCN, -CH=CH₂, -NH-CH₂-CH₂-NH₂, -N-(CH₂-CH₂-NH₂)₂ -OOC(CH₃)C=CH₂ -OCH₂-CH(O)CH₂ -NH-CO-N-CO-(CH₂)₅ -NH-COO-CH₃, -NH-COO-CH₂-CH₃, -NH-(CH₂)₃Si(OR)₃ -Sₓ-(CH₂)₃Si(OR)₃, where X = 1 to 10 and R may be alkyl, such as methyl-, ethyl-, propyl-, butyl- -SH -NR'R"R"' (R' = alkyl, aryl; R'' = H,
   alkyl, aryl; R"' = H, alkyl, aryl, benzyl, C₂H₉NR"" R""' with R"" = A, alkyl and R"'" = H, alkyl)
g) Organosilanes of the type (R")ₓ(RO)_{y}Si(CH₂)ₘ-R'
   - R" =: alkyl x+y = 2 = cycloalkyl x = 1.2 y = 1.2 m = 0.1 to 20
   - R' =: methyl-, aryl (for example -C₆H₅, substituted phenyl radicals)
   -C₄F₉, -OCF₂-CHF-CF₃, -C₆F₁₃, -O-CF₂-CHF₂
   -NH₂, -N₃, -SCN, -CH=CH₂, -NH-CH₂-CH₂-NH₂,
   -N-(CH₂-CH₂-NH₂)₂
   -OOC(CH₃)C = CH₂
   -OCH₂-CH(O)CH₂
   -NH-CO-N-CO-(CH₂)₅
   -NH-COO-CH₃, -NH-COO-CH₂-CH₃, -NH-(CH₂)₃Si(OR)₃
   -Sₓ-(CH₂)₃Si(OR)₃, where X = 1 to 10 and R may be methyl-, ethyl-, propyl-, butyl- -SH
   - NR'R"R"' (R' = alkyl, aryl; R" = H, alkyl, aryl; R"' = H, alkyl, aryl, benzyl, C₂H₉NR"" R"" with R"" = A, alkyl and R""' = H, alkyl)
h) Haloorganosilanes of the type X₃Si(CH₂)ₘ-R'
   - X =: Cl, Br
   - m =: 0.1-20
   - R' =: methyl-, aryl (for example -C₆H₅, substituted phenyl radicals) -C₄F₉, -OCF₂-CHF-CF₃, -C₆F₁₃, -O-CF₂-CHF₂ -NH₂, -N₃, -SCN, -CH=CH₂, -NH-CH₂-CH₂-NH₂ -N-(CH₂-CH₂-NH₂)₂ -OOC(CH₃)C= CH₂ -OCH₂-CH(O)CH₂ -NH-CO-N-CO-(CH₂)₅ -NH-COO-CH₃, -NH-COO-CH₂-CH₃, -NH-(CH₂)₃Si(OR)₃ -Sₓ-(CH₂)₃Si(OR)₃, where X = 1 to 10 and R may be methyl-, ethyl-, propyl-, butyl- -SH
i) Haloorganosilanes of the type (R)X₂Si(CH₂)ₘ-R'
   - X =: Cl, Br
   - R =: alkyl, such as methyl-, ethyl-, propyl-
   - m =: 0.1-20
   - R' =: methyl-, aryl (for example -C₆H₅, substituted phenyl radicals) -C₄F₉, -OCF₂-CHF-CF₃, -C₆F₁₃, -O-CF₂-CHF₂ -NH₂, -N₃, -SCN, -CH=CH₂, -NH-CH₂-CH₂-NH₂, -N-(CH₂-CH₂-NH₂)₂ -OOC(CH₃) C = CH₂ -OCH₂-CH(O)CH₂ -NH-CO-N-CO-(CH₂)₅ -NH-COO-CH₃, -NH-COO-CH₂-CH₃, -NH-(CH₂)₃Si(OR)₃, where R may be methyl-, ethyl-, propyl-, butyl- -Sₓ-(CH₂)₃Si(OR)_{3'} where R may be methyl-, ethyl-, propyl-, butyl- and X may be 1 to 10 -SH
j) Haloorganosilanes of the type (R)₂X Si(CH₂)ₘ-R'
   - X =: Cl, Br
   - R =: alkyl, such as methyl-, ethyl-, propyl-, butyl-
   - m =: 0.1-20
   - R' =: methyl-, aryl (e.g. -C₆H₅, substituted phenyl radicals) -C₄F₉, -OCF₂-CHF-CF₃, -C₆F₁₃, -O-CF₂-CHF₂ -NH₂, -N₃, -SCN, -CH=CH₂, -NH-CH₂-CH₂-NH₂, -N-(CH₂-CH₂-NH2)₂ -OOC(CH₃)C=CH₂ -OCH₂-CH(O)CH₂ -NH-CO-N-CO-(CH₂)₅ -NH-COO-CH₃, -NH-COO-CH₂-CH₃, -NH-(CH₂)₃Si(OR)₃ -Sₓ-(CH₂)₃Si(OR)₃, where X = 1 to 10 and R may be methyl-, ethyl-, propyl-, butyl- -SH
k) Silazanes of the type 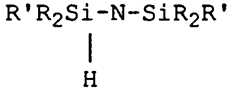
   - R =: alkyl
   - R' =: alkyl, vinyl
l) Cyclic polysiloxanes of the type D 3, D 4, D 5, where D 3, D 4 and D 5 are understood as meaning cyclic polysiloxanes having 3,4 or 5 units of the type -O-Si(CH₃)₂-_{,} e.g. octamethylcyclotetrasiloxane = D 4 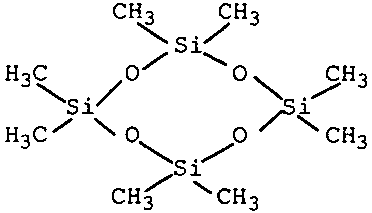
m) Polysiloxanes or silicone oils of the type 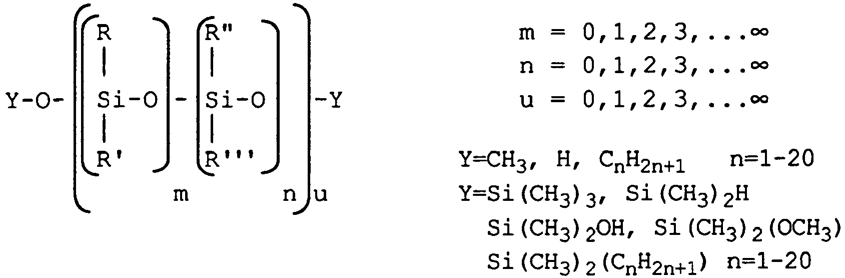
R = alkyl, such as CₙH₂ₙ₊₁, where n is 1 to 20, aryl, such as phenyl and substituted phenyl radicals, (CH₂)ₙ-NH_{2,} H
R' = alkyl, such as CₙH₂ₙ₊₁, where n is 1 to 20, aryl, such as phenyl and substituted phenyl radicals, (CH₂)ₙ-NH₂, H
R" = alkyl, such as CₙH₂ₙ₊₁, where n is 1 to 20, aryl, such as phenyl and substituted phenyl radicals, (CH₂)ₙ-NH₂, H
R'" = alkyl, such as CₙH₂ₙ₊₁, where n is 1 to 20, aryl, such as phenyl and substituted phenyl radicals, (CH₂)ₙ-NH₂, H

In a preferred embodiment of the invention, HMDS (hexamethyldisilazane) can be used for imparting water repellency to the flakes.

A hydrophilic, pyrogenically prepared silicon dioxide having the following physical chemical characteristics can be used as starting material:

| | |
|---|---|
| BET surface area: | 30-400 m²/g |
| Tamped density: | 40-200 g/l |
| Mean primary particle size: | 5-50 nm |

The invention furthermore relates to a process for the production of the hydrophobic flakes, which is characterized in that hydrophilic, pyrogenically prepared silicon dioxide is compacted to give flakes, the flakes are then optionally comminuted and are classified by sieving, the flakes are then optionally sprayed with water or a catalyst or reaction auxiliary, such as, for example, dilute acid or base solution, such as, for example, hydrochloric acid or ammonia, and then sprayed with a water repellent, the mixture is allowed to ripen at a temperature of 10 to 80°C and is then annealed for a time of 0.5 to 8 hours at a temperature of 80 to 140°C, preferably 100 to 130°C.

The hydrophobic flakes according to the invention which comprise pyrogenically prepared silicon dioxide have the following advantages:

The flakes represent a low-dust to dust-free dosage form of the hydrophobic silicon dioxide. The flakes according to the invention are also distinguished by a substantially increased tamped density, which is associated with a small packing volume.

### Examples

The hydrophilic, pyrogenically prepared silica AEROSIL^{®} 300 was used as starting material.

AEROSIL^{®} 300 has the following physical chemical characteristics:

| **Properties** | **Unit** | **Guide values** |
|---|---|---|
| Specific surface area (BET) | m²/g | 300 ± 30 |
| Mean size of the primary particles | nm | 7 |
| Tamped density (approx. value)* based on DIN EN ISO 787/11, August 1983 | g/l | About 50 |
| Loss on drying* 2 h at 105°C | % by weight | < 1.5 |
| Loss on ignition 2 h at 1000°C, based on the dried substance (2 h at 105°C) | % by weight | < 2.0 |
| pH value 4% strength dispersion | | 3.7-4.7 |
| SiO₂ content, based on the ignited substance | % by weight | > 99.8 |

AEROSIL^{®} 300 was compacted according to EP 1 813 574 to give flakes.

The flakes were sieved with fractionation and were classified.

The flakes were then sprayed with HMDS (hexamethyldisilazane).

The mixture was then allowed to ripen for up to three weeks at a temperature of 10 to 50°C.

The mixture was then annealed for 5 hours at 130°C.

Table 1 summarizes the production conditions.

Table 2 shows the physicochemical data of the flakes obtained.

**Table 1**

| Production conditions: | | | | | | |
|---|---|---|---|---|---|---|
| **Example** | **Starting material** | **Silane HMDS [parts]** | **Ripening time [d]** | **Ripening temperature [°C]** | **Reaction time [h]** | **Reaction temperature [°C]** |
| 1 | AEROSIL^{®} 300, fractionated, sieved flakes | 20 | 22 | 15-30 | 5 | 130 |
| 2 | AEROSIL^{®} 300, fractionated, sieved flakes | 40 | 22 | 15-30 | 5 | 130 |

**Table 2**

| The surface-modified flakes obtained which comprise pyrogenically prepared silicon dioxide have the following physicochemical parameters: | | | | | | |
|---|---|---|---|---|---|---|
| **Example** | **Tamped density [g/1]** | **Loss on drying [%]** | **Loss on ignition [%]** | **pH DIN** | **DBP number [%]** | **Carbon content [%]** |
| 1 | 298 | 0.7 | 4.1 | 7.0 | 128 | 3.4 |
| 2 | 293 | 0.5 | 3.4 | 8.3 | 125 | 3.3 |

## Claims

1. Flakes comprising pyrogenically prepared silicon dioxide, **characterized in that** the flakes are rendered water repellent after compacting.

2. Process for the production of flakes according to Claim 1, **characterized in that** hydrophilic, pyrogenically prepared silicon dioxide is compacted to give flakes, the flakes are sprayed with a water repellent, the mixture is allowed to ripen at a temperature of 10 to 80°C and then annealed for a time of 0.5 to 8 hours at a temperature of 80 to 140°C, preferably 100 to 130°C.

3. Use of the hydrophobic flakes comprising pyrogenically prepared silicon dioxide according to claim 1 in natural rubber and synthetic rubber production.

## Patentansprüche

1. Schülpen aus pyrogen hergestelltem Siliciumdioxid, **dadurch gekennzeichnet, dass** die Schülpen nach der Kompaktierung hydrophobiert wurden.

2. Verfahren zur Herstellung der Schülpen gemäß Anspruch 1, **dadurch gekennzeichnet, dass** man hydrophiles, pyrogen hergestelltes Siliciumdioxid zu Schülpen kompaktiert, die Schülpen mit einem Hydrophobierungsmittel besprüht, das Gemisch bei einer Temperatur von 10 bis 80°C reifen lässt und anschließend während einer Zeit von 0,5 bis zu 8 Stunden bei einer Temperatur von 80 bis 140°C, bevorzugt 100 bis 130°C, tempert.

3. Verwendung der hydrophoben Schülpen aus pyrogen hergestelltem Siliciumdioxid gemäß Anspruch 1 bei der Kautschuk- und Gummiherstellung.

## Revendications

1. Paillettes comprenant du dioxyde de silicium préparé par voie pyrogénique, **caractérisées en ce que** les paillettes sont rendues hydrofuges après compactage.

2. Procédé de production de paillettes selon la revendication 1, **caractérisé en ce que** du dioxyde de silicium hydrophile préparé par voie pyrogénique est compacté pour donner des paillettes, les paillettes sont arrosées d'hydrofuge, on laisse le mélange mûrir à une température de 10 à 80°C, puis le mélange est recuit pendant une période de 0,5 à 8 heures à une température de 80 à 140°C, de préférence de 100 à 130°C.

3. Utilisation de paillettes hydrophobes comprenant du dioxyde de silicium préparé par voie pyrogénique selon la revendication 1 dans la préparation du caoutchouc naturel et du caoutchouc synthétique.
